# FASCICULE DE BREVET EUROPEEN

(11) **EP 1 102 693 B1**
(45) Date de publication et mention de la délivrance du brevet: **02.05.2003**
(21) Numéro de dépôt: 99931354.7
(22) Date de dépôt: 16.07.1999
(51) Int. Cl.: B60S 1/40

(54) **ESSUIE-GLACE DE VEHICULE AUTOMOBILE**
KRAFTFAHRZEUGSCHEIBENWISCHER
MOTOR VEHICLE WINDSCREEN WIPER

(30) Priorité: 07.08.1998 FR 9810209
(43) Date de publication de la demande: 30.05.2001
(73) Titulaire: VALEO SYSTEMES D'ESSUYAGE, 78321 La Verrière (FR)
(72) Inventeur: RAYNAUD, Richard, F-63320 Champeix (FR)
(74) Mandataire: Lemaire, Marc
(86) Numéro de dépôt international: FR9901739
(87) Numéro de publication internationale: WO00007857

(56) Documents cités:
- EP-A- 0 236 061
- DE-A- 4 224 866
- US-A- 4 418 441

## Description

L'invention concerne un essuie-glace de véhicule automobile comportant des moyens perfectionnés de liaison d'un balai d'essuie-glace sur un bras d'essuie-glace.

L'invention concerne plus particulièrement un essuie-glace de véhicule automobile, du type dans lequel un balai d'essuie-glace est lié à l'extrémité longitudinale avant d'un bras d'essuie-glace, autour d'un axe transversal horizontal, par l'intermédiaire d'un connecteur qui est monté sur le balai.

Un essuie-glace selon le préambule de la revendication 1 est connu du document EP 0 236 061.

Selon une conception connue du montage articulé d'un balai à l'extrémité d'un bras, en particulier d'après le document FR-A-2.744.082, le connecteur est emboîté élastiquement selon la direction radiale sur une tige d'articulation du balai et l'extrémité avant du bras est recourbée longitudinalement pour former un crochet dans lequel le connecteur, une fois monté sur le balai , doit être engagé longitudinalement d'arrière en avant.

Pour des raisons de rigidité et de compacité de l'articulation, mais aussi pour des questions d'esthétique, le connecteur est généralement reçu entre deux flancs latéraux du balai qui sont reliés par la tige d'articulation. De la sorte, l'extrémité avant du bras doit elle aussi être reçue entre les flancs du balai, en avant du connecteur par rapport au balai pour permettre l'engagement du connecteur dans le crochet du bras.

Un tel montage, s'il présente des garanties de fiabilité, se révèle particulièrement délicat à effectuer et impose que le balai présente, en avant de la tige d'articulation, une ouverture aménagée dans un dos supérieur du balai pour permettre l'engagement de l'extrémité avant du bras. Une telle ouverture demeure au moins partiellement apparente après le montage du balai sur le bras et provoque l'apparition de flux d'air parasites en fonctionnement.

L'invention a pour but de proposer une nouvelle conception des moyens d'articulation du balai sur le bras qui permette un montage et un démontage aisé du balai, même par une personne non expérimentée. En effet, le propriétaire du véhicule est amené à changer régulièrement ses balais d'essuie-glace et il doit pouvoir procéder à cette opération de la manière la plus simple possible.

Par ailleurs, les essuie-glace étant des pièces apparentes à l'extérieur du véhicules, il est souhaitable de leur conférer un caractère esthétique, en évitant le plus possible toute discontinuité de forme. De plus, les flux d'air qui résultent de ces discontinuités sont à éviter pour empêcher toute perturbation parasite.

Par ailleurs, les essuie-glace étant des pièces apparentes à l'extérieur du véhicules, il est souhaitable de leur conférer un caractère esthétique, en évitant le plus possible toute discontinuité de forme. De plus, les flux d'air qui résultent de ces discontinuités sont à éviter pour empêcher toute perturbation parasite.

Pour atteindre ces objectifs, il est proposé d'intégrer au connecteur des moyens élastiques de sécurité, libérables par simple pression.

Plus précisément, l'invention a pour objet un essuie-glace du type décrit précédemment, dans lequel connecteur comporte des moyens d'articulation portés par deux flancs longitudinaux parallèles entre lesquels est reçu le balai, les moyens d'articulation du connecteur coopérant avec des moyens complémentaires du balai, les flancs du connecteur étant reçus entre deux flasques latéraux de l'extrémité du bras. De plus, le connecteur comporte un poussoir de sécurité, présentant un bouton, reçu dans une lumière du bras pour bloquer longitudinalement le connecteur par rapport au bras, prolongé par un doigt de sécurité coopérant avec des moyens élastiques de verrouillage, libérables par pression exercée sur le bouton.

Selon des modes particuliers de réalisation de l'invention :
- les flancs du connecteur sont reçus à coulissement longitudinal chacun respectivement dans deux évidements aménagés dans des faces internes en vis-à-vis des deux flasques latéraux de l'extrémité avant du bras ;
- les moyens élastiques pour verrouiller le blocage longitudinal du connecteur par rapport au bras sont constitués par des jambes d'élasticité formées dans les flancs du connecteur ;
- les moyens élastiques de verrouillage sont formés d'une languette élastique qui s'étend horizontalement vers l'arrière depuis le corps avant auquel elle est liée par son extrémité avant, formant une charnière d'axe horizontal, la languette supportant le poussoir dont le doigt est terminé par une avancée de verrouillage susceptible de s'introduire et de s'extraire du balai par escamotage vers le bas, à travers un jour de dimension adapté formé dans le balai, et par pivotement de la languette élastique pour verrouiller ou libérer le blocage longitudinal du connecteur par rapport au bras ;
- en variante, les moyens de verrouillage sont formés par un ressort hélicoïdal s'étendant le long du doigt de sécurité et prenant appui sur un pliage rapporté du balai venant en regard du doigt.
- les flasques latéraux du bras sont recourbés par matriçage et cambrage afin d'obtenir un calage des flancs du connecteur, en particulier lors des sollicitations en torsion ;
- les flancs du connecteur comportent deux ergots sensiblement cylindriques d'axe horizontal qui s'étendent en direction l'un de l'autre depuis des faces en vis-à-vis des deux flancs, et qui sont destinés à être reçus dans des orifices correspondants des flancs du balai lorsque les flancs sont en position d'articulation pour assurer le montage articulé du connecteur sur le balai ;
- le corps avant du connecteur est en appui longitudinalement vers l'arrière par une face transversale arrière contre une face transversale avant de l'extrémité avant du bras ;
- des faces externes du corps avant du connecteur sont agencées dans le prolongement de faces externes correspondantes de l'extrémité avant du bras ;

D'autres caractéristiques et avantages de l'invention apparaîtront à la lecture de la description détaillée qui suit pour la compréhension de laquelle on se reportera aux dessins annexés qui représentent respectivement :
- les figures 1, 2 et 3, des vues partielles en perspective d'un essuie-glace selon l'invention illustrant trois étapes successives du montage du balai sur le bras ;
- la figure 4, une vue en section transversale selon la ligne 4-4 de la figure 5, illustrant un exemple de réalisation de connecteur ;
- la figure 5 est une vue partielle en coupe longitudinale selon la ligne 5-5 de la figure 4 ;
- les figures 6 et 7, des vues partielles en section transversale, respectivement selon les lignes 6-6 et 7-7 de la figure 5 ;
- la figure 8, une vues en coupe longitudinale illustrant un autre exemple de réalisation du connecteur ;
- la figure 9, une vue perspective d'un autre exemple de réalisation de connecteur.

On a représenté sur les figures un essuie-glace 10 comportant un balai d'essuie-glace 12 qui est destiné à être monté en liaison articulée autour d'un axe transversal A1, horizontal en considérant les figures, à l'extrémité longitudinale avant 14 d'un bras d'essuie-glace 16.

A cet effet, il est prévu un connecteur 18 qui est monté articulé sur une portion centrale d'articulation 20 d'un étrier principal 22 du balai 12 et qui est destiné à être fixé à l'extrémité avant 14 du bras 16.

Comme on peut le voir sur les figures, la partie centrale 20 d'articulation du balai 12 comporte deux flancs latéraux longitudinaux 24 qui sont sensiblement parallèles et qui sont munis chacun d'un orifice sensiblement circulaire 26 d'axe A1. Les deux flancs 24 sont réunis par un dos supérieur 28 et une ouverture sensiblement circulaire 30 est aménagée dans le dos supérieur 28 au niveau de la portion d'articulation 20.

Le connecteur 18 comporte un corps avant 32 qui présente en section transversale une forme de U renversé comportant deux branches latérales sensiblement verticales 34 et une branche transversale supérieure 36 sensiblement horizontale. Le corps avant 32 est destiné à chevaucher l'étrier 22 du balai d'essuie-glace 12.

Depuis une face transversale arrière 38 du corps avant 32, deux flancs parallèles 40 s'étendent longitudinalement vers l'arrière dans le prolongement des branches verticales 34 du corps avant 32. Les flancs 40 se présentent sous la forme de plaques qui s'étendent dans un plan vertical et sont reliés par un dos 56. Il est possible, par déformation élastique, d'écarter transversalement les flancs l'un de l'autre en les faisant pivoter chacune autour de leur extrémité avant 42 de liaison avec le corps avant 32 qui forme une charnière d'axe sensiblement vertical.

Les flancs 40 portent chacun, sur une face interne 44 tournée en direction de l'aile opposée, un ergot cylindrique 46 qui s'étend transversalement selon l'axe A1 en direction du flanc 40 opposée. A l'état libre, les faces internes 44 des flancs 40 sont éloignés l'un de l'autre d'une distance sensiblement égale à la largueur transversale de la portion centrale d'articulation 20 du balai 12.

De la sorte les ergots cylindriques 46 sont susceptibles d'être reçus dans les orifices circulaires 26 des flancs 24 du balai 12.

Au contraire, lorsque les flancs 40 sont écartés transversalement l'un de l'autre, ler ergots 46 sont dégagés des orifices 26 de sorte que le connecteur 18 peut être engagé ou dégagé selon la direction verticale par rapport au balai 12.

Bien entendu, on peut prévoir que les ergots soient portés par le balai 12 et qu'ils soient reçus dans des orifices aménagés dans les flancs 40 du connecteur 18.

Il est à noter qu'il est prévu un espace suffisant entre le dos supérieur 28 de l'étrier 22 et la branche transversale supérieure 36 du corps avant 32 du connecteur 18 pour permettre un débattement en rotation suffisant du connecteur 18 par rapport au balai 12.

Les flancs 40 du connecteur 18 sont destinés à être reçus à l'intérieur de l'extrémité avant 14 du bras 16 de telle manière que l'extrémité 14 empêche tout écartement des flancs 40, provoqué par exemple par des sollicitations en torsion lors du fonctionnement du balai. Ainsi, lorsque le connecteur 18 est monté sur le balai 12 et qu'il est engagé dans l'extrémité avant 14 du bras 16, les ergots 46 des ailes 40 ne peuvent plus être dégagés des orifices 26, ce qui empêche tout démontage du connecteur 18 par rapport au balai 12.

A cet effet, l'extrémité avant 14 du bras 16 comporte deux flasques longitudinaux sensiblement verticaux 48 qui sont réunis par un dos supérieur transversal 50 et entre lesquels les flancs 40 du connecteur 18 sont destinés à être reçus.

Les flasques transversaux 48 comportent, sur des faces internes verticales en regard l'une de l'autre, des évidements 52 sensiblement de la même forme que les flancs 40 de telle sorte que ceux-ci puissent y être introduits longitudinalement d'avant en arrière. Les flasques latéraux du bras sont recourbés par matriçage et cambrage afin d'obtenir un calage des flancs 40 du connecteur.

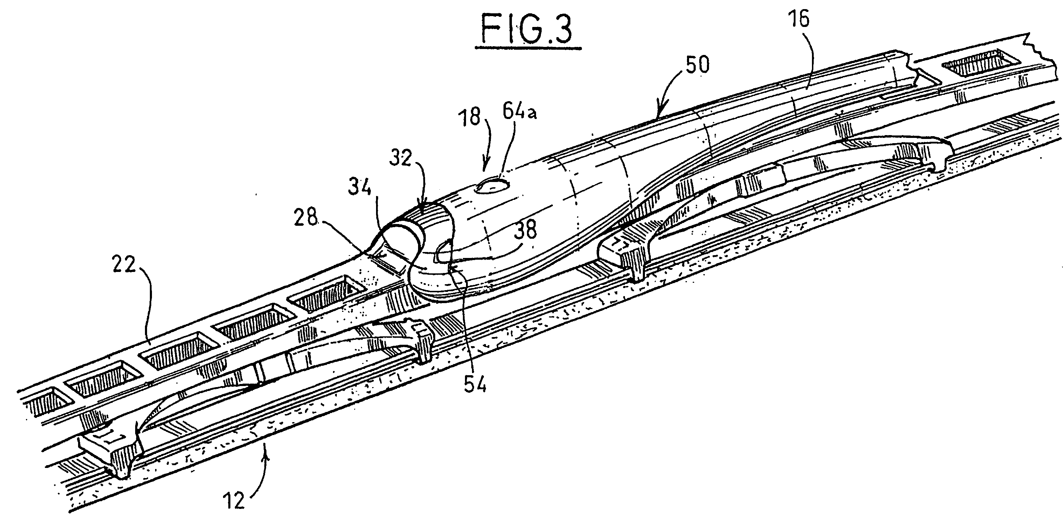

Comme on peut le voir sur les figures 3,5 et 8, la face transversale arrière 38 du corps avant 32 est destinée à venir en appui longitudinalement vers l'arrière contre une face transversale avant 54 de l'extrémité avant 14 du bras 16. De préférence, le corps avant 32 et l'extrémité avant 14 du bras 16 sont conçus de telle manière que leurs faces externes respectives soient agencées dans le prolongement l'une de l'autre pour assurer une continuité esthétique entre le bras 16 et le corps avant 32 qui reste apparent à l'extérieur de l'extrémité 14 du bras 16 lorsque les flancs 40 du connecteur 18 sont reçus entre les flasques 48.

On a par ailleurs prévu des moyens de sécurité qui permettent de verrouiller le connecteur 18 à l'intérieur de l'extrémité avant 14 du bras 16 sous la forme d'un poussoir, formé d'un bouton prolongé par un doigt coopérant avec des moyens élastiques. Avantageusement, ces moyens permettent un déblocage aisé en vue de permettre le remplacement du balai 12 lorsqu'il est usé.

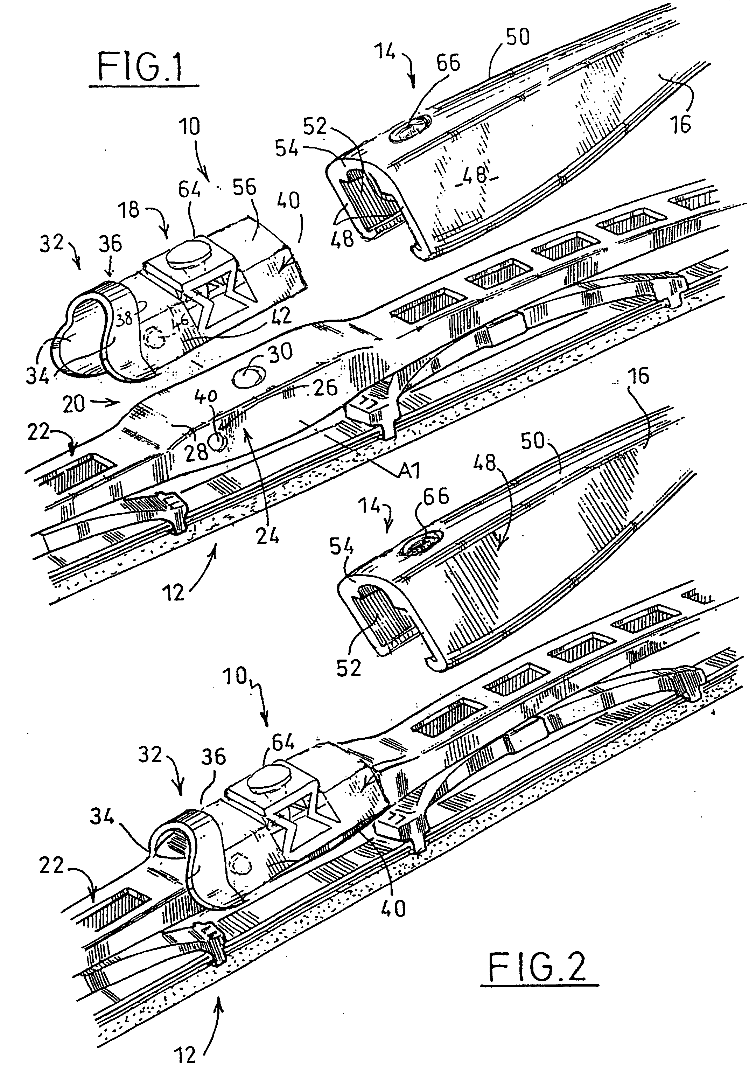

Dans l'exemple de réalisation illustré aux figures 1 à 7, le poussoir 64, comportant le bouton 64a prolongé par le doigt 64b, coopère avec des jambes d'élasticité 64c supportant une portion 56a.La portion 56a, conformé selon le dos de connecteur 56, est disposée entre le bouton et le doigt, et surplombe le reste du dos56. L'ensemble du connecteur est formé par moulage dans cet exemple de réalisation.

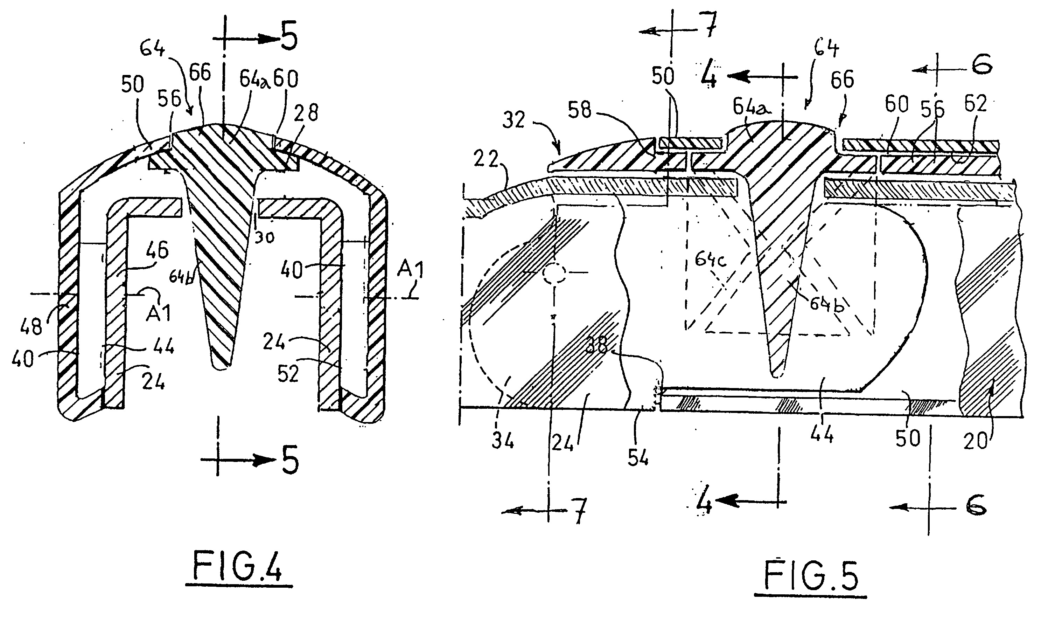

Comme plus particulièrement illustré sur les figures 4 et 5, lorsque le connecteur 18 est engagé dans l'extrémité avant 14 du bras 16, cette portion 56a vient s'ajuster dans le prolongement du dos du connecteur, en regard de la face supérieure 60 de ce dos, de sorte que les jambes 56c exerce une force de rappel sur le dos 50 du bras. Cette force de rappel verrouille efficacement le connecteur 10 et le balai 12 sur le bras d'entraînement 14.

Le bouton 64a est reçu dans une lumière 66 formée dans le dos supérieur 50 du bras 16 de manière à immobiliser longitudinalement le connecteur 18.

Une pression sur le bouton 56a, contre la force de rappel exercée sur les jambes 56c, permet de dégager ce bouton de la lumière 66 et de déverrouiller longitudinalement le connecteur 18 vers l'avant.

De plus l'ouverture 30, aménagée dans le dos supérieur 28 de l'étrier 22, est dans cet exemple de réalisation de diamètre adapté au doigt 56b pour retenir le poussoir, en combinaison avec les jambes élastiques, afin de maintenir un verrouillage efficace du balai.

L'assemblage d'un essuie-glace 10 selon l'invention comporte ainsi les étapes suivantes.

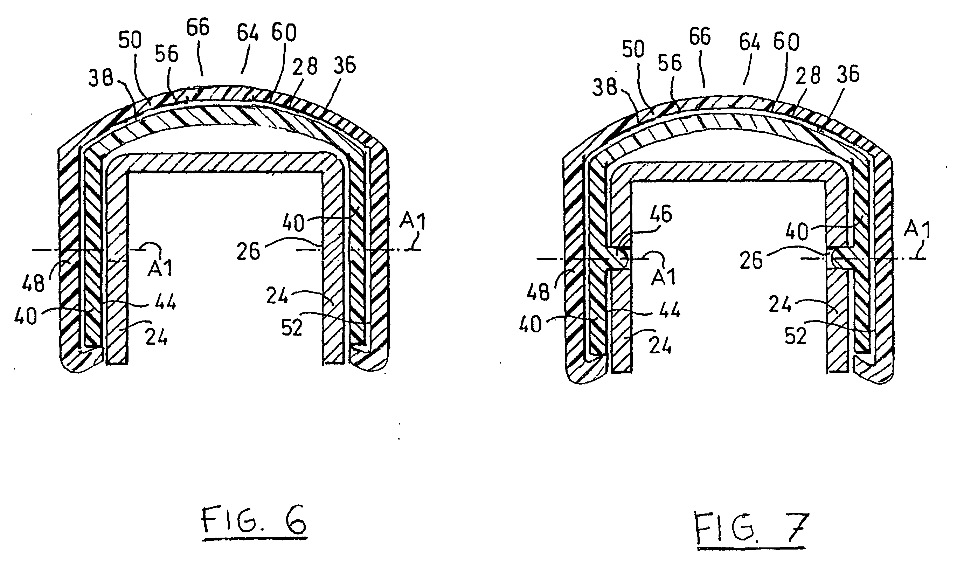

Le connecteur 18 est tout d'abord monté sur le balai 12 en écartant les flancs 40 du connecteur 18 transversalement l'une de l'autre (position de montage) de manière à pouvoir engager le connecteur 18 verticalement du haut vers le bas à cheval sur la portion centrale d'articulation 20 du balai 12. Lorsque les ergots 46 des ailes 40 sont en regard des orifices 26 (figure 7), on relâche les flancs 40 (position d'articulation) de sorte que les ergots 46 s'engagent dans les orifices 26 et réalisent le montage articulé du connecteur 18 sur le balai 12.

Ensuite, l'ensemble du balai 12 et du connecteur 18 est engagé longitudinalement d'avant en arrière à l'intérieur de l'extrémité avant 14 du bras 16 de manière que les flancs 40 du connecteur 18 soient reçus dans les évidements 52 aménagés dans les flasques 48 de l'extrémité avant 14 (figure 6). Durant cette opération, il est nécessaire d'effacer vers le bas le poussoir 64 en exerçant une pression contra la force de rappel des jambes 64c.

Lorsque le bouton 64a arrive longitudinalement en regard de la lumière 66 du bras 16, il reprend élastiquement une position intermédiaire dans laquelle la portion 56a arrive en regard du dos de connecteur 56 de manière à former une quasi continuité.

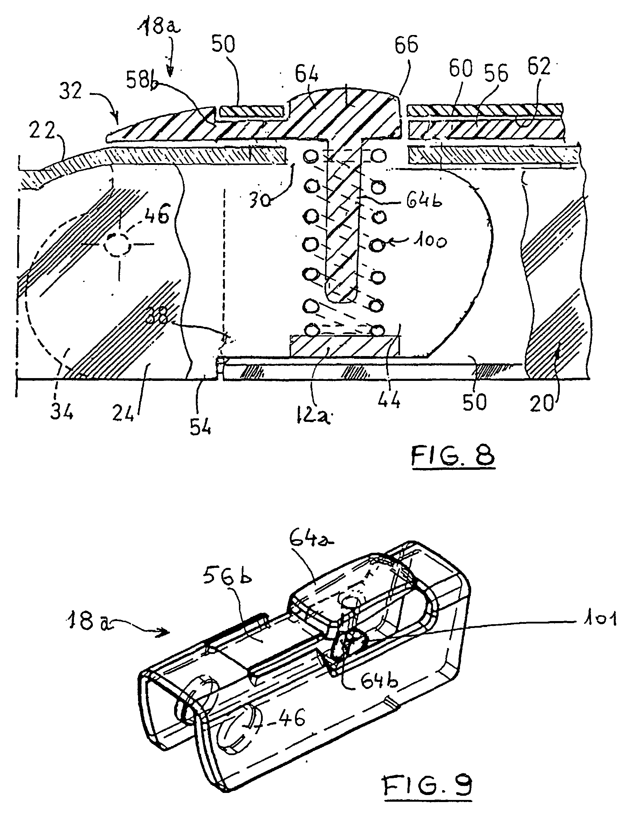

Selon d'autres exemples de réalisation, comme illustré sur les figures 8 et 9, le poussoir 64 , formé du bouton 64a et du doigt 64b, est monté sur le connecteur 18a par l'intermédiaire d'une languette 56b. La languette 56b agit comme élément élastique de déverrouillage du balai sur le bras. La languette, qui est par exemple réalisée sous la forme d'un élément de plaque horizontal, qui s'étend longitudinalement vers l'arrière, sensiblement dans le prolongement de la branche transversale supérieure 36 du corps avant 32 du connecteur 18. L'extrémité avant 58b de la languette 56b, forme une charnière d'axe sensiblement horizontal pour le languette 56.

Sur la figure 8, le doigt 64b coopère avec un ressort hélicoïdal 100 qui prend appui sur une partie repliée 12a rapportée du balai venant en regard du doigt.

Sur la figure 9, le doigt 64b est terminé par une avancée de verrouillage susceptible de s'introduire et de s'extraire du balai par escamotage vers le bas, à travers un jour 30 de dimension adapté formé dans le balai (figure 1), et par pivotement de la languette élastique pour verrouiller ou libérer le blocage longitudinal du connecteur par rapport au bras.

L'invention n'est pas limitée aux exemples de réalisation décrits et représentés. Il est par exemple possible de prévoir d'autres moyens élastiques de verrouillage, par exemple des tiges transversales coopérant avec des crochets disposés à l'extrémité du doigt du poussoir.

## Revendications

1. Essuie-glace de véhicule automobile, du type dans lequel un balai d'essuie-glace (12) est articulé à l'extrémité longitudinale avant (14) d'un bras d'essuie-glace (16), autour d'un axe transversal horizontal (A1), par l'intermédiaire d'un connecteur (18) qui est articulé sur le balai (12),
le connecteur (18, 18a) comporte des moyens d'articulation (46) portés par deux flancs longitudinaux parallèles (40) entre lesquels est reçu le balai, les moyens d'articulation du connecteur coopérant avec des moyens complémentaires du balai, les flancs du connecteur étant reçus entre deux flasques latéraux (48)de l'extrémité (14) du bras (16), le connecteur comporte un poussoir de sécurité (64), présentant un bouton (64a), reçu dans une lumière (66) du bras pour bloquer longitudinalement le connecteur par rapport au bras, **caractérisé en ce que** le bouton est prolongé par un doigt de sécurité (64b) coopérant avec des moyens élastiques de verrouillage (64c, 56b, 100, 101), libérables par pression exercée sur le bouton.

2. Essuie-glace selon la revendication 1, **caractérisé en ce que** le balai (12) comporte un corps avant (32) qui présente sensiblement une forme de U renversé en section transversale et qui chevauche le balai (12) et **en ce que** les deux flancs (40) s'étendent vers l'arrière par rapport au corps (32) avant auquel elles sont reliées par leur extrémité avant (42).

3. Essuie-glace selon la revendication 2, **caractérisé en ce que** les flancs du connecteur (18) sont reçus à coulissement longitudinal dans l'extrémité avant (14) du bras (16), chacun respectivement dans deux évidements aménagés dans des faces internes en vis-à-vis des deux flasques latéraux de l'extrémité avant du bras.

4. Essuie-glace selon la revendication 3, **caractérisé en ce que** les évidements (52) des flasques latéraux (48) de l'extrémité (14) du bras (16) sont débouchants vers l'avant, **en ce que** le connecteur (18) est engagé longitudinalement d'avant en arrière entre les flasques latéraux (48), et **en ce que** les flasques latéraux du bras sont recourbés par matriçage et cambrage afin d'obtenir un calage des flancs du connecteur.

5. Essuie-glace selon l'une quelconque des revendications précédentes, **caractérisé en ce que** les moyens élastiques pour verrouiller le blocage longitudinal du connecteur par rapport au bras sont constitués par des jambes d'élasticité (64c) formées dans les flancs du connecteur.

6. Essuie-glace selon l'une quelconque des revendications 1à 4, **caractérisé en ce que** les moyens élastiques pour verrouiller le blocage longitudinal du connecteur par rapport au bras sont constitués par une languette élastique (56b) qui s'étend horizontalement vers l'arrière depuis le corps avant (32) auquel elle est liée par son extrémité avant (58), formant une charnière d'axe horizontal, la languette supportant le poussoir dont le doigt est terminé par une avancée de verrouillage susceptible de s'introduire et de s'extraire du balai par escamotage vers le bas, à travers un jour de dimension adapté formé dans le balai, et par pivotement de la languette élastique pour verrouiller ou libérer le blocage longitudinal du connecteur par rapport au bras ;

7. Essuie-glace selon la revendication 6, **caractérisé en ce que** les moyens de verrouillage sont formés par un ressort hélicoïdal (100) s'étendant le long du doigt de sécurité (64b) et prenant appui sur un pliage (12a) rapporté du balai venant en regard du doigt.

8. Essuie-glace selon la revendication 6, **caractérisé en ce que** les moyens de verrouillage sont formés par une avancée (101) formée à l'extrémité du doigt (64b).

9. Essuie-glace selon l'une quelconque des revendications précédentes, **caractérisé en ce que** les flasques latéraux du bras sont. recourbés par matriçage et cambrage afin d'obtenir un calage des flancs du connecteur.

## Patentansprüche

1. Scheibenwischer eines Kraftfahrzeugs, bei dem ein Scheibenwischerblatt (12) anhand eines auf dem Wischerblatt (12) montierten Verbindungsstücks (18) mit dem vorderen Längsende (14) eines Scheibenwischerarms (16) um eine horizontale Querachse (A1) verbunden ist, bei dem das Verbindungsstück (18, 18a) Gelenkmittel (46) umfasst, die von zwei parallelen Längsflanken (40) getragen werden, zwischen denen das Wischerblatt aufgenommen wird, wobei die Gelenkmittel des Verbindungsstücks mit komplementären Mitteln des Wischerblatts zusammenwirken, wobei die Flanken des Verbindungsstücks zwischen zwei seitlichen Flanschen (48) des Endes (14) des Arms (16) aufgenommen werden, wobei das Verbindungsstück einen einen Knopf (64a) aufweisenden Sicherheitsschieber (64) umfasst, der in einer Aussparung (66) des Arms aufgenommen wird, um das Verbindungsstück in Bezug auf den Arm in Längsrichtung zu arretieren, **dadurch gekennzeichnet, dass** der Knopf von einem Sicherheitsfinger (64b) verlängert wird, der mit federnden Verriegelungsmitteln (64c, 56b, 100, 101) zusammenwirkt, die durch einen auf den Knopf ausgeübten Druck freigesetzt werden können.

2. Scheibenwischer nach Anspruch 1, **dadurch gekennzeichnet, dass** das Wischerblatt (12) einen vorderen Körper (32) umfasst, der im Querschnitt etwa die Form eines umgedrehten U aufweist, und der auf dem Wischerblatt (12) sitzt, und dass sich die beiden Flanken (40) in Bezug auf den vorderen Körper (32), mit dem sie an ihrem vorderen Ende (42) verbunden sind, nach hinten erstrecken.

3. Scheibenwischer nach Anspruch 2, **dadurch gekennzeichnet, dass** die Flanken des Verbindungsstücks (18) in Längsrichtung verschiebbar im vorderen Ende (14) des Arms (16) aufgenommen werden, jede in jeweils zwei Vertiefungen, die in internen Flächen gegenüber den beiden seitlichen Flanschen des vorderen Endes des Arms vorgesehen sind.

4. Scheibenwischer nach Anspruch 3, **dadurch gekennzeichnet, dass** die Aussparungen (52) der seitlichen Flansche (48) des Endes (14) des Arms (16) nach vorne hin offen sind, dass das Verbindungsstück (18) in Längsrichtung von vorne nach hinten zwischen den seitlichen Flanschen (48) eingeführt wird, und dass die seitlichen Flansche des Arms durch Gesenkformen und Tiefprägen gekrümmt sind, um eine Anstellung der Flanken des Verbindungsstücks zu erhalten.

5. Scheibenwischer nach einem der vorgenannten Ansprüche, **dadurch gekennzeichnet, dass** die federnden Mittel zum Verriegeln der Längsarretierung des Verbindungsstücks in Bezug auf den Arm aus in den Flanken des Verbindungsstücks ausgebildeten Federbeinen (64c) bestehen.

6. Scheibenwischer nach einem der Ansprüche 1 bis 4, **dadurch gekennzeichnet, dass** die federnden Verriegelungsmittel zum Verriegeln der Längsarretierung des Verbindungsstücks in Bezug auf den Arm aus einer Federlasche (56b) bestehen, die sich horizontal nach hinten erstreckt, ab dem vorderen Körper (32), mit dem sie an ihrem vorderen Ende (58) verbunden ist, wodurch ein Scharnier mit horizontaler Achse gebildet wird, wobei die Lasche den Schieber trägt, dessen Finger in einem Verriegelungsvorsprung endet, der durch ein im Wischerblatt ausgebildetes Loch von geeigneter Größe in das Wischerblatt eingefahren und durch Einziehen nach unten ausgefahren werden kann, sowie durch Drehen der Federlasche, um die Längsarretierung des Verbindungsstücks in Bezug auf den Arm zu verriegeln oder zu lösen.

7. Scheibenwischer nach Anspruch 6, **dadurch gekennzeichnet, dass** die Verriegelungsmittel durch eine Schraubenfeder (100) gebildet werden, die sich entlang dem Sicherheitsfinger (64b) erstreckt und sich auf eine angesetzte Faltung (12a) des Wischerblatts gegenüber dem Finger abstützt.

8. Scheibenwischer nach Anspruch 6, **dadurch gekennzeichnet, dass** die Verriegelungsmittel durch einen am Ende des Fingers (54b) ausgebildeten Vorsprung (101) gebildet werden.

9. Scheibenwischer nach einem der vorgenannten Ansprüche, **dadurch gekennzeichnet, dass** die seitlichen Flansche des Arms durch Gesenkformen und Tiefprägen gekrümmt sind, um eine Anstellung der Flanken des Verbindungsstücks zu erhalten.

## Claims

1. A motor vehicle windscreen wiper of the type in which a wiper blade (12) is articulated at the front longitudinal end (14) of a wiper arm (16), about a horizontal transverse axis (A1), by means of a connector (18) articulated on the blade (12), the connector (18, 18a) comprises articulation means (46) carried by two parallel longitudinal flanks (40) between which the blade is received, the articulation means of the connector cooperating with complementary means on the blade, the flanks of the connector being received between two lateral flanges (48) at the end (14) of the arm (16), the connector comprises a security pusher (64), having a button (64a), received in an aperture (66) in the arm in order to lock the connector longitudinally with respect to the arm, **characterised in that** the button is extended by a security finger (64b) cooperating with elastic locking means (64c, 56b, 100, 101), able to be released by pressure exerted on the button.

2. A wiper according to Claim 1, **characterised in that** the blade (12) comprises a front body (32) which is substantially in the shape of an inverted U in transverse section and which straddles the blade (12), and **in that** the two flanks (40) extend towards the rear with respect to the front body (32), to which they are connected by their front end (42).

3. A wiper according to Claim 2, **characterised in that** the flanks of the connector (18) are received for longitudinal sliding in the front end (14) of the arm (16), each respectively in two recesses provided in facing internal faces of the two lateral flanges on the front end of the arm.

4. A wiper according to Claim 3, **characterised in that** the recesses (52) in the lateral flanges (48) of the end (14) of the arm (16) open out towards the front, **in that** the connector (18) is engaged longitudinally from front to rear between the lateral flanges (48), and **in that** the lateral flanges of the arm are curved by stamping and raising in order to obtain a wedging of the flanks of the connector.

5. A wiper according to any one of the preceding claims, **characterised in that** the elastic means for locking the longitudinal locking of the connector with respect to the arm consist of elastic legs (64c) formed in the flanks of the connector.

6. A wiper according to any one of Claims 1 to 4, **characterised in that** the elastic means for locking the longitudinal locking of the connector with respect to the arm consist of an elastic tongue (56b) which extends horizontally towards the rear from the front body (32), to which it is connected by its front end (58), forming a hinge of horizontal axis, the tongue supporting the pusher whose finger terminates in a locking protrusion able to be introduced and extracted from the blade by downward retraction, through an opening of suitable size formed in the blade, and by pivoting of the elastic tongue in order to lock or release the longitudinal locking of the connector with respect to the arm.

7. A wiper according to Claim 6, **characterised in that** the locking means are formed by a helical spring (100) extending along the security finger (64b) and bearing on an attached fold (12a) of the blade coming opposite the finger.

8. A wiper according to Claim 6, **characterised in that** the locking means are formed by a protrusion (101) formed at the end of the finger (64b).

9. A wiper according to any one of the preceding claims, **characterised in that** the lateral flanges on the arm are curved by stamping and raising in order to obtain a wedging of the flanks of the connector.
